Europäisches Patentamt

European Patent Office

Office européen des brevets

(11) Veröffentlichungsnummer: **0 392 212**
**A2**

## (12) EUROPÄISCHE PATENTANMELDUNG

(21) Anmeldenummer: **90105017.9**

(22) Anmeldetag: **16.03.90**

(51) Int. Cl.⁵: **H04Q 11/04, H04L 12/52**

(30) Priorität: **14.04.89 DE 3912333**

(43) Veröffentlichungstag der Anmeldung:
**17.10.90 Patentblatt 90/42**

(84) Benannte Vertragsstaaten:
**AT BE CH DE DK ES FR GB GR IT LI LU NL SE**

(71) Anmelder: **Nixdorf Computer Aktiengesellschaft**
**Fürstenallee 7**
**D-4790 Paderborn(DE)**

(72) Erfinder: **Schreiber, Harald**
**Strandasternweg 7**
**D-4797 Salzkotten(DE)**

(74) Vertreter: **Schaumburg, Thoenes & Englaender**
**Mauerkircherstrasse 31 Postfach 86 07 48**
**D-8000 München 86(DE)**

(54) **Verfahren zum Steuern des Aufbaus von Datenübertragungsverbindungen in Telekommunikationsanlagen.**

(57) In einer Telekommunikationsanlage werden Datenübertragungsverbindungen als Ringverbindungen aufgebaut.

Fig. 4

EP 0 392 212 A2

# Verfahren zum Steuern des Aufbaus von Datenübertragungsverbindungen in Telekommunikationsanlagen

Die Erfindung betrifft ein Verfahren zum Steuern des Aufbaus von Datenübertragungsverbindungen in Telekommunikationsanlagen mit digitalen Koppelfeldern und Teilnehmer-Berechtigungskennzeichnung, die bei einem Belegungswunsch in der Steuerung der Telekommunikationsanlage geprüft wird.

Ein Verfahren dieser Art ist in der deutschen Patentanmeldung P 38 08 647.6-31 beschrieben. Es ermöglicht den Aufbau von Datenübertragungsverbindungen in Telekommunikationsanlagen mit Koppelfeldern, in denen mindestens einer der von einer Teilnehmerstation hervorgerufenen Signalzustände einer Koppelleitung von einer anderen Teilnehmerstation her veränderbar ist. Eine solche Struktur der Koppelfelder ist nicht in allen Telekommunikationsanlagen gegeben. Es sind dann zusätzliche Einrichtungen erforderlich, die eine logische Verknüpfung mehrerer Eingangskanäle zulassen. Einrichtungen solcher Art sind auch als sogenannte Server bekannt. Diese haben mehrere Ein- und Ausgänge, welche über Punkt-zu-Punkt-Verbindungen von vielen Teilnehmerstationen her erreichbar sind. In solchen Servern werden die zwischen den Teilnehmerstationen auszutauschenden Datenpakete gesammelt und verteilt.

Der Aufbau von Datenübertragungsverbindungen in Telekommunikationsanlagen, an denen mehr als zwei Teilnehmerstationen beteiligt sind, ist deshalb bisher entweder nur bei ganz bestimmten Koppelfeldern möglich oder aber mit einem nicht unerheblichen schaltungstechnischen Aufwand verbunden.

Es ist Aufgabe der Erfindung, ein Verfahren zum Steuern des Aufbaus von Datenübertragungsverbindungen in Telekommunikationsanlagen anzugeben, das bei beliebigen Koppelfeldern durchgeführt werden kann und keinen zusätzlichen schaltungstechnischen Aufwand erfordert.

Diese Aufgabe wird für ein Verfahren eingangs genannter Art erfindungsgemäß dadurch gelöst, daß Teilnehmerstationen mit Datenübertragungsberechtigung ein entsprechendes Berechtigungskennzeichen zugeordnet ist, dessen Erkennen in der Steuerung ein Einschleifen der zur Datenübertragung berechtigten Teilnehmerstation in eine Ringverbindung veranlaßt, die gegebenenfalls weitere derart eingeschleifte Teilnehmerstationen enthält und in der die gegebenenfalls veränderten Ausgangsinformationen der jeweiligen Teilnehmerstation wieder auf deren Eingang zurückgeführt werden.

Bei einer Ringverbindung der bei der Erfindung vorgesehenen Art wird der Ausgang einer Teilnehmerstation mit dem Eingang der jeweils nächsten Teilnehmerstation in der Ringverbindung verbunden. Solche Verbindungen sind Punkt-zu-Punkt-Verbindungen, die mit beliebigen Koppelfeldern hergestellt werden können. Deshalb ist bei Anwendung der Erfindung keine besondere Koppelfeldstruktur erforderlich. Außerdem entfallen zusätzliche Schalteinrichtungen, mit denen logische Verknüpfungen mehrerer Eingangskanäle hergestellt werden müssen. Zum Einschleifen einer belegenden Teilnehmerstation in eine Ringverbindung ist lediglich das Prüfen der belegenden Teilnehmerstation hinsichtlich ihrer Datenübertragungsberechtigung erforderlich, und wenn diese vorliegt, so kann damit die Steuerung der Telekommunikationsanlage veranlaßt werden, ihre Arbeitsweise umzustellen, so daß nicht direkte Verbindungen zwischen jeweils zwei Teilnehmerstationen, sondern ringförmig zusammengesetzte Punkt-xu-Punkt-Verbindungen aufgebaut werden.

In der Ringverbindung gibt die jeweilige Teilnehmerstation Informationen ab, die den Ring in einer vorbestimmten Richtung durchlaufen, in anderen Teilnehmerstationen gegebenenfalls verändert werden und dann zum Ausgangspunkt zurückkommen. Die Informationsänderungen hängen von dem jeweiligen Datenübertragungsprotokoll sowie davon ab, ob die Informationen ein vorgegebenes Ziel erreicht haben.

Das Verfahren kann derart weiter ausgebildet sein, daß zum Einschleifen eine existierende Ringverbindung ermittelt und einer ihrer Übertragungsabschnitte geöffnet wird und daß bei Fehlen einer Ringverbindung der Eingang und der Ausgang der belegenden Teilnehmerstation verbunden werden.

Wenn bei Belegung durch eine datenübertragungsberechtigte Teilnehmerstation noch keine Ringverbindung in dem Koppelfeld vorhanden ist, so werden die Ausgangsinformationen dieser Teilnehmerstation direkt auf ihren Eingang zurückgeführt, d.h. es wird eine direkte Verbindung zwischen Ausgang und Eingang dieser Teilnehmerstation hergestellt. Auch dabei handelt es sich um eine Ringverbindung, in die die belegende Teilnehmerstation eingeschleift ist. Wenn dann eine weitere Teilnehmerstation mit Datenübertragungsberechtigung hinzu kommt, so wird diese in die Ringverbindung eingeschleift, die zunächst nur aus dem einen Übertragungsabschnitt besteht. Hierzu wird dieser Übertragungsabschnitt geöffnet.

Für die Datenübertragungsverbindungen kann es zweckmäßig sein, wenn die an der Datenübertragung beteiligten Teilnehmerstationen in der Ringverbindung eine z.B. durch das Datenübertragungsprotokoll vorgegebene Reihenfolge haben. Wenn eine zusätzliche Teilnehmerstation in die Ringverbindung eingeschleift werden soll, so ist dann das erfindungsgemäße Verfahren vorteilhaft derart weiter ausgebildet, daß der zu öffnende Übertragungsabschnitt gemäß einer vorgegebenen Reihenfolge der Teilnehmerstationen in der Ringverbindung ermittelt wird. Dadurch befindet sich dann die hinzugekommene Teilnehmerstation an der durch die vorgegebene Reihenfolge definierten Position in der Ringverbindung.

Vorteilhaft wird vor dem Einschleifen ein zusätzlicher Übertragungskanal in der Telekommunikationsanlage gesucht und dann zusammen mit dem geöffneten Übertragungsabschnitt zum Einschleifen der belegenden Teil nehmerstation als zweiter Übertragungsabschnitt benutzt. Diese Weiterbildung des Verfahrens ist darauf zurückzuführen, daß in einer bereits bestehenden Ringverbindung die Zahl der Übertragungsabschnitte der Zahl der in der Ringverbindung vorhandenen Teilnehmerstationen entspricht. Kommt nun eine weitere Teilnehmerstation hinzu, so ist ein weiterer Übertragungsabschnitt erforderlich, um diese Teilnehmerstation in die Ringverbindung einzuschleifen. Wenn der zusätzliche Übertragungskanal vor dem Einschleifen gesucht wird, so steht er als Übertragungsabschnitt für das Einschleifen unmittelbar zur Verfügung.

Wenn die Telekommunikationsanlage mit einem Zeitmultiplex-Koppelfeld arbeitet, so ist es erforderlich, einer neu eingeschleiften Teilnehmerstation Zeitschlitze für Empfang und Sendung zuzuordnen. Einer dieser beiden Zeitschlitze ist in der Ringverbindung bereits für den Übertragungsabschnitt vorhanden, der zum Einschleifen geöffnet wird. Deshalb muß der neu eingeschleiften Teilnehmerstation nur noch ein zweiter Zeitschlitz zugeordnet werden. Entsprechend ist das erfindungsgemäße Verfahren dann derart ausgebildet, daß bei einer ein Zeitmultiplex-Koppelfeld enthaltenden Telekommunikationsanlage das Einschleifen einer belegenden Teilnehmerstation mit einer Neuzuordnung des Sende- bzw. des Empfangszeitschlitzes für eine der beiden der belegenden Teilnehmerstation benachbarten Teilnehmerstationen verbunden ist.

Abhängig von der Datenübertragungskapazität einer Telekommunikationsanlage bzw. der in ihr vorhandenen Ringverbindung kann es erforderlich sein, eine Verbindung zwischen dieser Ringverbindung und einem weiteren Datenübertragungssystem herzustellen, das seinerseits z.B. eine Ringverbindung sein kann, die in der hier betrachteten Telekommunikationsanlage oder aber in einem anderen System existiert. Hierzu ist das Verfahren nach der Erfindung vorteilhaft derart weiter ausgebildet, daß die Ringverbindung über eine Verbindungseinrichtung geführt wird, die eine Verbindung mit einem anderen Datenübertragungssystem herzustellen vermag. Dies bedeutet, daß in der Ringverbindung stets eine Verbindungseinrichtung enthalten ist, die gewissermaßen als Teilnehmerstation an der Ringverbindung zu betrachten ist, jedoch ihrerseits eine Verbindung zu dem anderen Datenübertragungssystem herstellt. Dadurch ist es möglich, die Zahl der an der Datenübertragung beteiligten Teilnehmerstationen zu erhöhen, eine Ringverbindung jedoch nicht wesentlich höher zu belasten. Die zusätzliche Belastung der Ringverbindung, welche die Verbindungseinrichtung enthält, besteht dann nämlich nur in dem Datenverkehr, der mit dem anderen Datenübertragungssystem abgewickelt wird.

Die Erfindung wird im folgenden an Hand der Zeichnung näher erläutert. Darin zeigen:

Fig. 1 das Flußdiagramm einer Ausführungsform des Verfahrens,

Fig. 2 bis 4 schematische Darstellungen einer Telekommunikationsanlage für unterschiedliche Schaltzustände und

Fig. 5 die schematische Darstellung einer Telekommunikationsanlage mit einer Verbindungseinrichtung zur Verbindung mit einem weiteren Datenübertragungssystem.

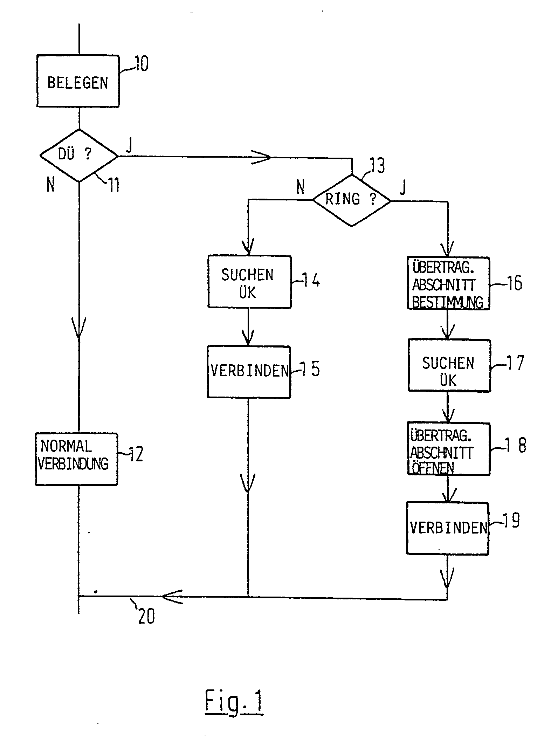

Das in Fig. 1 gezeigte Flußdiagramm stellt den Ablauf des erfindungsgemäßen Verfahrens innerhalb der Steuerung einer Telekommunikationsanlage dar. In dieser Steuerung wird im Rahmen eines normalen Verbindungsaufbaus, der in Fig. 1 nicht weiter dargestellt ist, u.a. in einem Schritt 10 das Belegen durch eine Teilnehmerstation festgestellt. Als weiterer Schritt 11 ist in den Steuerablauf eine Entscheidung eingefügt, mit der festgestellt wird, ob die belegende Teilnehmerstation eine Berechtigung zur Datenübertragung besitzt oder nicht. Ist dies nicht der Fall, so wird in einem Schritt 12 der Steuerablauf zur Herstellung einer normalen Telekommunikationsverbindung fortgesetzt. Die auf den Schritt 12 folgenden Schritte sind in Fig. 1 nicht weiter dargestellt.

Wenn in dem Schritt 11 eine Berechtigung der belegenden Teilnehmerstation zur Datenübertragung festgestellt wird, so wird als nächster Schritt nicht der Schritt 12, sondern eine weitere Entscheidung in einem Schritt 13 angesteuert, in der festgestellt wird, ob in der Telekommunikationsanlage bereits eine Ringverbindung existiert oder nicht. Wenn keine Ringverbindung existiert, so wird in einem Schritt 14 ein freier Übertragungskanal gesucht, der dann in einem Schritt 15 zum Verbinden des Ausgangs mit dem Eingang der belegenden Teilnehmerstation benutzt wird. Über den Weg 20 kann dann wieder der normale Steuerablauf erreicht und fortgesetzt werden.

Wird in dem Schritt 13 festgestellt, daß eine Ringverbindung bereits existiert, so wird in einem Schritt 16 ein Übertragungsabschnitt der Ringverbindung bestimmt, der zum Einschleifen einer belegenden Teilnehmerstation zu öffnen ist. In einem weiteren Schritt 17 wird dann noch ein freier Übertragungskanal gesucht, der, wie bereits beschrieben, beim Einschleifen als weiterer Übertragungsabschnitt erforderlich ist. Danach wird der im Schritt 16 bestimmte Übertragungsabschnitt in einem Schritt 18 geöffnet, und in einem Schritt 19 werden die Verbindungen hergestellt, die zum Einschleifen der belegenden Teilnehmerstation erforderlich sind. Nach dem Schritt 19 kann über den Weg 20 wieder der normale Steuerablauf erreicht werden.

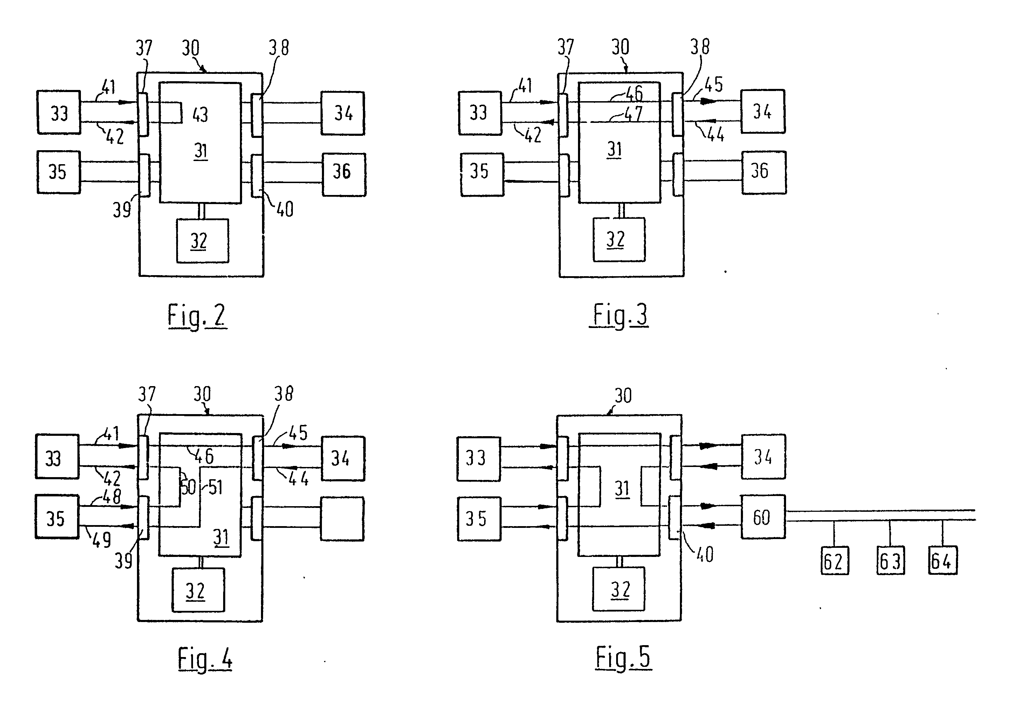

In Fig. 2 ist der Zustand einer Telekommunikationsanlage 30 schematisch dargestellt, der sich nach Ablauf der Schritte 14 und 15 des in Fig. 1 gezeigten Verfahrensablaufs ergibt. Das Telekommunikationssystem 30 enthält ein Koppelfeld 31 und eine Steuerung 32, in der die an Hand der Fig. 1 erläuterten Verfahrensschritte neben den normalen Steuerverfahren ablaufen können. An das Koppelfeld 31 sind Teilnehmerstationen 33, 34, 35, 36 jeweils über eine Teilnehmeranschlußschaltung 37, 38, 39, 40 angeschlossen. Die Teilnehmerstation 33 ist mit ihrer Teilnehmeranschlußschaltung 37 über einen Sendekanal 41 und einen Empfangskanal 42 verbunden. Aus Fig. 2 geht hervor, daß diese beiden Kanäle 41 und 42 in dem Koppelfeld 31 über einen Übertragungskanal, der den Übertragungsabschnitt 43 bildet, miteinander verbunden sind. Dieser Übertragungsabschnitt 43 bildet mit der Teilnehmerstation 33 bereits eine Ringverbindung.

In Fig. 3 ist die Telekommunikationsanlage 30 in einem Schaltzustand dargestellt, der sich für zwei in eine Ringverbindung einbezogene Teilnehmerstationen nach den in Fig. 1 gezeigten Schritten 16 bis 19 ergibt. Die beiden Teilnehmerstationen 33 und 34, die jeweils über den Sendekanal 41 bzw. 44 und den Empfangskanal 42 bzw. und über ihre jeweilige Teilnehmeranschlußschaltung 37 bzw. 38 an das Koppelfeld 31 angeschlossen sind, bilden über Übertragungsabschnitte 46 und 47 eine Ringverbindung. Dabei kann z.B. der Übertragungsabschnitt 46 aus dem in Fig. 2 gezeigten Übertragungskanal des Übertragungsabschnitts 43 gebildet sein. Nur der Übertragungskanal des Übertragungsabschnitts 47 ist deshalb bei Herstellen dieser Ringverbindung in dem Schritt 17 zu suchen.

In Fig. 4 ist der Zustand der Telekommunikationsanlage 30 dargestellt, der sich für eine Ringverbindung ergibt, in die drei Teilnehmerstationen 33, 34 und 35 einbezogen sind. Er kann dadurch entstanden sein, daß in die in Fig. 3 gezeigte Ringverbindung zusätzlich die Teilnehmerstation 35 eingeschleift wurde. Somit existiert auch in dem in Fig. 4 gezeigten Zustand der Übertragungsabschnitt 46, jedoch sind neue Übertragungsabschnitte 50 und 51 vorgesehen, von denen einer dem zuvor existierenden Übertragungskanal des Übertragungsabschnitts 47 entsprechen kann. Die Teilnehmerstation 35 ist über einen Sendekanal 48 und einen Empfangskanal 49 sowie über ihre Teilnehmeranschlußschaltung 39 mit dem Koppelfeld 31 verbunden.

In Fig. 5 ist die Telekommunikationsanlage 30 mit einer Ringverbindung dargestellt, die drei Teilnehmerstationen 33, 34 und 35 sowie eine Verbindungseinrichtung 60 enthält. Diese Ringverbindung ist gleichfalls das Ergebnis der Verfahrensschritte 16 bis 19 nach Fig. 1. Die Verbindungseinrichtung 60 dient zur Verbindung der in der Telekommunikationsanlage 30 vorhandenen Ringverbindung mit einem weiteren Datenübertragungssystem, das schematisch als Bus 61 dargestellt ist, an den mehrere Teilnehmerstationen 62, 63, 64 angeschlossen sind. Es ist auch möglich, die Verbindungseinrichtung 60 in ihre Teilnehmeranschlußschaltung 40 mit einzubeziehen, so daß dann eine besondere, außerhalb der Telekommunikationsanlage vorzusehende Funktionseinheit entfällt.

**Ansprüche**

1. Verfahren zum Steuern des Aufbaus von Datenübertragungsverbindungen in Telekommunikationsanlagen mit digitalen Koppelfeldern und Teilnehmer-Berechtigungskennzeichnung, die bei einem Belegungswunsch in der Steuerung der Telekommunikationsanlage geprüft wird, dadurch **gekennzeichnet,** daß Teilnehmerstationen mit Datenübertragungsberechtigung ein entsprechendes Berechtigungskennzeichen zugeordnet ist, dessen Erkennen in der Steuerung ein Einschleifen der zur Datenübertragung berechtigten Teilnehmerstation in eine Ringverbindung veranlaßt, die gegebenenfalls weitere derart eingeschleifte Teilnehmerstationen enthält und in der die gegebenenfalls veränderten Ausgangsinformationen der jeweiligen Teilnehmerstation wieder auf deren Eingang zurückgeführt werden.

2. Verfahren nach Anspruch 1, dadurch **gekennzeichnet,** daß zum Einschleifen eine existierende Ringverbindung ermittelt und einer ihrer Übertragungsabschnitte geöffnet wird und daß bei Fehlen einer Ringverbindung der Eingang und der Ausgang der belegenden Teilnehmerstation verbunden werden.

3.Verfahren nach Anspruch 2, dadurch **gekennzeichnet,** daß der zu öffnende Übertragungsabschnitt gemäß einer vorgegebenen Reihenfolge der Teilnehmerstationen in der Ringverbindung ermittelt wird.

4. Verfahren nach Anspruch 2 oder 3, dadurch **gekennzeichnet,** daß vor dem Einschleifen ein zusätzlicher Übertragungskanal in der Telekommunikationsanlage gesucht und dann zusammen mit dem geöffneten Übertragungsabschnitt zum Einschleifen der belegenden Teilnehmerstation als zweiter Übertragungsabschnitt benutzt wird.

5. Verfahren nach Anspruch 4, dadurch **gekennzeichnet,** daß bei einer ein Zeitmultiplex-Koppelfeld enthaltenden Telekommunikationsanlage das Einschleifen einer belegenden Teilnehmerstation mit einer Neuzuordnung des Sende- bzw. des Empfangszeitschlitzes für eine der beiden der belegenden Teilnehmerstation benachbarten Teilnehmerstationen verbunden ist.

6. Verfahren nach einem der vorhergehenden Ansprüche, dadurch **gekennzeichnet,** daß die Ringverbindung über eine Verbindungseinrichtung geführt wird, die eine Verbindung mit einem anderen Datenübertragungssystem herzustellen vermag.

BELEGEN —10

DÜ ? —11
J
N

RING ? —13
N J

NORMAL VERBINDUNG —12

SUCHEN ÜK —14

VERBINDEN —15

ÜBERTRAG. ABSCHNITT BESTIMMUNG —16

SUCHEN ÜK —17

ÜBERTRAG. ABSCHNITT ÖFFNEN —18

VERBINDEN —19

—20

Fig.1

EP 0 392 212 A2

Fig.2

Fig.3

Fig.4

Fig.5